# EUROPÄISCHE PATENTSCHRIFT

(11) **EP 3 638 394 B1**
(45) Veröffentlichungstag und Bekanntmachung des Hinweises auf die Patenterteilung: **29.12.2021**
(21) Anmeldenummer: 18737187.7
(22) Anmeldetag: 26.06.2018
(51) Int. Cl.: B01D 19/02, B01D 3/08

(54) **LABORGERÄT ZUM VERDAMPFEN EINES STOFFES**
LABORATORY APPARATUS FOR VAPORIZING A SUBSTANCE
APPAREIL DE LABORATOIRE DESTINÉ À L'ÉVAPORATION D'UNE SUBSTANCE

(30) Priorität: 27.06.2017 DE 202017003355 U
(43) Veröffentlichungstag der Anmeldung: 22.04.2020
(73) Patentinhaber: Hans Heidolph GmbH, 93309 Kelheim (DE)
(72) Erfinder: LINDNER, Lea, 90408 Nürnberg (DE); LÖSCHEL, Robert, 91126 Schwabach (DE)
(74) Vertreter: Prüfer & Partner mbB Patentanwälte · Rechtsanwälte
(86) Internationale Anmeldenummer: PCT/EP2018/067171
(87) Internationale Veröffentlichungsnummer: WO 2019/002326

(56) Entgegenhaltungen:
- EP-A1- 2 873 965
- DE-A1- 10 114 434
- DE-A1- 10 226 478
- DE-A1-102013 204 459

## Beschreibung

Die vorliegende Erfindung bezieht sich auf ein Laborgerät zum Verdampfen eines Stoffes, insbesondere auf eine in dieser Vorrichtung enthaltene Erfassungseinrichtung zur Schaumerkennung.

Ein derartiges Laborgerät ist beispielsweise ein Rotationsverdampfer, welcher einen Rotationskolben zur Aufnahme des zu verdampfenden Stoffes umfasst. Der zu verdampfende Stoff wird durch Erwärmen des Rotationskolbens in einem Heizbad erhitzt und der Dampf durch eine Dampfdurchführung in einen Kondensator geleitet, wo es abgekühlt wird und dadurch kondensiert.

Dabei können sich in dem Ausgangsstoff Blasen bilden bzw. kann sich Schaum an dessen Oberseite entwickeln. Dringt dieser in die Dampfdurchführung und/oder den Kondensator vor, so besteht die Gefahr einer Verunreinigung des Destillats.

In der DE 10 2013 204 459 A1 ist es daher vorgesehen, einen mechanischen Schaumzerstörer, welcher als ein Rotor ausgebildet ist, in dem Dampfweg zwischen Rotationskolben und Kondensator anzuordnen, Der rotierende Schaumzerstörer kommt dabei direkt in Kontakt mit dem aufsteigenden Schaum und zerstört diesen. Zudem offenbart DE10114434A1 einen Rotationsverdampfer mit Schaumsensoren.

Ferner ist der Anmelderin eine Lanze bekannt, welche in den Rotationskolben bzw. in den Dampfweg eingebracht wird um eine Schaumentwicklung zu erkennen. Die Lanze kommt dabei ebenfalls in direkten Kontakt mit dem aufsteigenden Schaum und dem verdampften Stoff.

Die Aufgabe der vorliegenden Erfindung besteht darin, ein alternatives bzw. verbessertes Laborgerät zum Verdampfen eines Stoffes bereitzustellen, bei dem insbesondere Erfassen und/oder Reduzieren von Schaum möglich ist, wobei die Gefahr der Verunreinigung des zu verdampfenden Stoffes vermieden wird.

Diese Aufgabe wird gelöst durch ein Laborgerät gemäß Anspruch 1 und ein Verfahren gemäß Anspruch 13. Weiterbildungen der Erfindung sind in den Unteransprüchen angegeben.

Ein erfindungsgemäßes Laborgerät ist insbesondere ein Rotationsverdampfer und dient zum Verdampfen eines Stoffes, vorzugsweise unter Unterdruck. Das Laborgerät weist einen Verdampfungskolben zur Aufnahme des zu verdampfenden Stoffes auf, einen Kondensator zum Kondensieren des verdampften Stoffes und eine Dampfdurchführung zum Durchleiten des verdampften Stoffes, welche in einem Dampfweg zwischen dem Verdampfungskolben und dem Kondensator angeordnet ist. Das Laborgerät umfasst weiter eine Erfassungseinheit zur Schaumerkennung, welche außerhalb der Dampfdurchführung und/oder des Verdampfungskolbens vorgesehen ist.

Unter dem Begriff "Stoff" sind hierbei sowohl Reinstoffe als auch Gemische zu verstehen, welche in flüssiger und/oder fester Phase vorliegen können. Der verdampfte Stoff kann alle oder nur eine bzw. mehrere Komponenten des Ausgangsstoffes umfassen und liegt nach dem Verdampfen in gasförmiger Phase vor. Er wird im Folgenden auch als Destillat bezeichnet.

Mit einem derartigen Laborgerät ist es beispielsweise möglich, eine Schaumentwicklung in der Dampfdurchführung und/oder in dem Verdampfungskolben berührungslos zu erkennen, d.h. ohne dass die Erfassungseinrichtung in direkten Kontakt mit dem Schaum, dem Dampf oder dem Ausgangsstoff kommt. Somit kann die Dampfdurchführung beispielsweise einstückig und/oder ohne abzudichtende Eingriffsöffnungen ausgebildet sein. Des Weiteren kann eine eventuelle Verunreinigung des Ausgangsstoffes vermieden werden, da kein Teil der Erfassungseinheit in den Schaum hineinragt.

Vorzugsweise ist die Erfassungseinheit an einer Stelle nach einem Normschliff des Verdampfungskolbens vorgesehen. Beispielsweise kann die Erfassungseinheit an einer Außenseite der Dampfdurchführung vorgesehen sein. Dadurch ist beispielsweise eine gute Erfassung von entstehendem Schaum ermöglicht.

Vorzugsweise weist die Dampfdurchführung einen Verbreiterungsabschnitt auf, und die Erfassungseinheit zur Schaumerkennung ist vorzugsweise an dem Verbreiterungsabschnitt anbringbar, Der Verbreiterungsabschnitt kann dabei beispielsweise derart ausgebildet sein, dass sich auftretender Schaum zuerst darin sammelt bevor er sich weiter im Dampfweg ausbreitet, wodurch beispielsweise die Erfassung durch den Sensor erleichtert wird.

Vorzugsweise ist eine Geometrie der Erfassungseinheit an eine Geometrie zumindest eines Abschnitts des Verdampfungskolbens oder der Dampfdurchführung, vorzugsweise eines Verbreiterungsabschnitts der Dampfdurchführung, angepasst, Dadurch kann beispielsweise eine Schaumerkennung über einen möglichst großen Bereich, beispielsweise einen Durchmesser, der Dampfdurchführung erfolgen,

Die Erfassungseinheit ist gabelförmig ausgebildet und umschließt die Dampfdurchführung und/oder der Verdampfungskolben zumindest teilweise, Damit kann beispielsweise Schaum in der Dampfdurchführung bzw. dem Verdampfungskolben auf einfache Art und Weise erfasst werden.

Vorzugsweise ist die Erfassungseinheit mittels einer Halterung an einer Außenseite der Dampfdurchführung oder an einem Gehäuse des Laborgeräts befestigbar. Dabei ist die Erfassungseinheit weiter bevorzugt bewegbar, vorzugsweise schwenkbar, mit der Halterung verbunden, so dass die Erfassungseinheit von der Dampfdurchführung und/oder dem Verdampfungskolben in eine Messposition und in eine von der Messposition beabstandete Position bewegbar ist. Damit kann die Erfassungseinheit beispielsweise an einer geeigneten Stelle der Dampfdurchführung angebracht und/oder von dieser entfernt werden, Vorzugsweise kann die Erfassungseinheit dabei von der Dampfdurchführung bzw, dem Verdampfungskolben beispielsweise weggeklappt, weggedreht oder komplett entfernt werden während die Halterung beispielsweise am Gerät verbleibt und/oder komplett abgenommen wird.

Die Erfassungseinheit umfasst zumindest einen Sensor zur Erfassung eines Signals, wobei der Sensor vorzugsweise ein optischer Sensor, weiter bevorzugt ein Rotlichtsensor ist. Mit einem Sensor, insbesondere einem Rotlichtsensor, kann beispielsweise eine Veränderung des Signals bei Auftreten von Schaum registriert werden.

Vorzugsweise umfasst das Laborgerät weiter eine Einrichtung zur Schaumreduzierung, wobei die Einrichtung zur Schaumreduzierung manuell und/oder automatisch bedienbar ist. Als "Einrichtung zur Schaumreduzierung" ist hierbei eine Einrichtung zu verstehen, welche dazu geeignet ist, Schaum zu reduzieren und/oder zu beseitigen. Damit kann beispielsweise entstandener Schaum unmittelbar nach dessen Erfassung durch die Erfassungseinheit reduziert und/oder vernichtet werden,

Vorzugsweise ist die Einrichtung zur Schaumreduzierung als Gaseinlass zum dosierten Zuführen eines Gases, insbesondere Luft oder einem Inertgas, ausgebildet. Dies ermöglicht beispielsweise einen auftretenden Schaum berührungslos und auf einfache und schnelle Art und Weise zu reduzieren bzw. zu zerstören.

Weiterhin umfasst das Laborgerät vorzugsweise eine Auswerteinheit zum Auswerten eines von der Erfassungseinheit erfassten Signals. Dadurch ist beispielsweise eine automatische Detektion von Schaum in der Gasdurchführung möglich.

Eine Steuereinheit für ein erfindungsgemäßes Laborgerät ist dazu ausgebildet und/oder programmiert, eine Einrichtung zur Schaumreduzierung in Abhängigkeit eines Signals einer Erfassungseinheit zur Schaumerkennung zu steuern, Dadurch kann beispielsweise eine Reduzierung und/oder Zerstörung von Schaum automatisch erfolgen,

Vorzugsweise ist die Steuereinheit weiter dazu ausgebildet und/oder programmiert eine Temperatur in dem Laborgerät, insbesondere eines Heizbades, und/oder eine Rotationsgeschwindigkeit eines drehbaren Verdampfungskolbens und/oder eine Einrichtung zum Erzeugen eines Unterdrucks zu steuern. Dadurch ist es beispielsweise möglich, Prozessparameter vor, während und/ oder nach dem Verdampfungsprozess derart anzupassen, dass eine Schaumbildung verringert, vorzugsweise vermieden wird.

Ein Laborgerät gemäß einem weiteren Aspekt der Offenbarung umfasst einen Behälter zur Aufnahme eines Stoffes und eine Erfassungseinheit zur Schaumerkennung, wobei die Erfassungseinheit außerhalb des Behälters und/oder eines weiteren Elements, in welches in dem Behälter entstehender Schaum vordringen kann, angeordnet ist. Vorzugsweise weist die Erfassungseinheit zumindest einen Sensor zur Erfassung eines Signals auf, wobei der Sensor vorzugsweise ein optischer Sensor ist, weiter bevorzugt ein Rotlichtsensor. Vorzugsweise umfasst das Laborgerät weiter eine Einrichtung zur Schaumreduzierung, welche weiter bevorzugt in Abhängigkeit eines Signals der Erfassungseinheit steuerbar ist.

Damit ist es beispielsweise möglich, die oben im Hinblick auf ein Laborgerät zum Verdampfen eines Stoffes beschriebenen Wirkungen auch allgemein bei Laborgeräten, in denen Schaum entstehen kann, zu erzielen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische Darstellung eines Rotationsverdampfers gemäß der vorliegenden Erfindung,
- Fig. 2a und 2b: zeigen schematische, teilweise im Schnitt dargestellte Ansichten einer in dem in Fig. 1 gezeigten Rotationsverdampfer enthaltenen erfindungsgemäßen Erfassungseinrichtung zur Schaumerkennung.

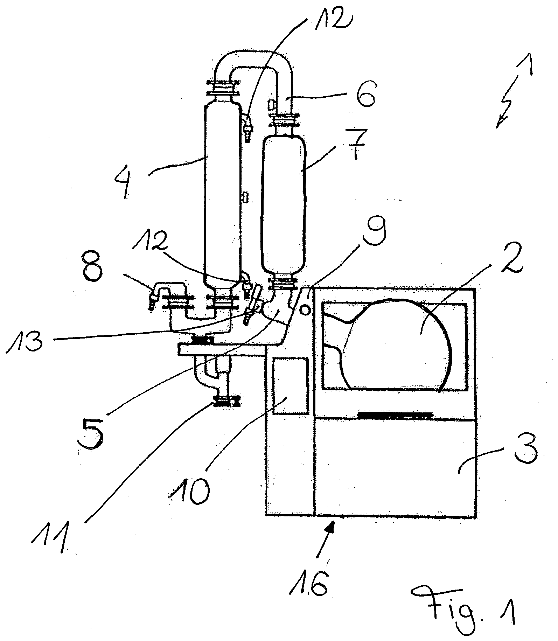

Im Folgenden wird mit Bezug auf Fig. 1 eine Ausführungsform der vorliegenden Erfindung beschrieben. Das in Fig. 1 dargestellte Laborgerät ist ein Rotationsverdampfer 1. Der Rotationsverdampfer weist optional ein Gehäuse 16 auf. Zur Aufnahme eines Ausgangsstoffes umfasst er einen Verdampfungskolben 2, welcher mittels eines Rotationsantriebs 9 um eine Rotationsachse drehbar ist. Der Verdampfungskolben 2 kann beispielsweise als ein Rundkolben aus Glas ausgestaltet sein. Der Ausgangsstoff kann ein Reinstoff oder auch ein Gemisch sein und liegt in flüssiger und/oder fester Phase in dem Verdampfungskolben 2 vor. Er enthält den zu verdampfenden Stoff.

Der Verdampfungskolben 2 ist in einem Heizbad 3 mit einer beheizbaren Flüssigkeit, beispielsweise Wasser, angeordnet. Über einen in Fig. 1 nicht gezeigten Vertikalantrieb ist die Eintauchtiefe des Verdampfungskolbens 2 in der Flüssigkeit des Heizbades 3 einstellbar.

Weiter enthält der Rotationsverdampfer 1 einen Kondensator 4, welcher über eine Dampfdurchführung 5, eine Dampfzuführung 6 und optional ein Expansionsgefäß oder ein Vorkühler 7 mit dem Verdampfungskolben 2 verbunden ist. Der Verdampfungskolben 2 und der Kondensator 4 bilden dabei vorzugsweise mit den in dem Dampfweg zwischen ihnen angeordneten Elementen ein gasdicht abgeschlossenes System. Zum Zuführen eines Gases in das abgeschlossene System, vorzugsweise Luft oder ein Inertgas, ist ein Gaseinlassventil 13 vorzugsweise an der Dampfdurchführung 5 vorgesehen. Ferner weist der Kondensator 4 einen Vakuumanschluss 8 auf zum Anschließen einer in Fig. 1 nicht gezeigten Vakuumpumpe zum Erzeugen eines Unterdrucks bis hin zu einem Vakuum in dem gasdicht abgeschlossenes System, Zum Zu- und Abführen eines Kühlmittels sind Anschlüsse 12 vorgesehen. Weiter weist der Kondensator 4 ein Auslassventil 11 für das kondensierte Destillat auf.

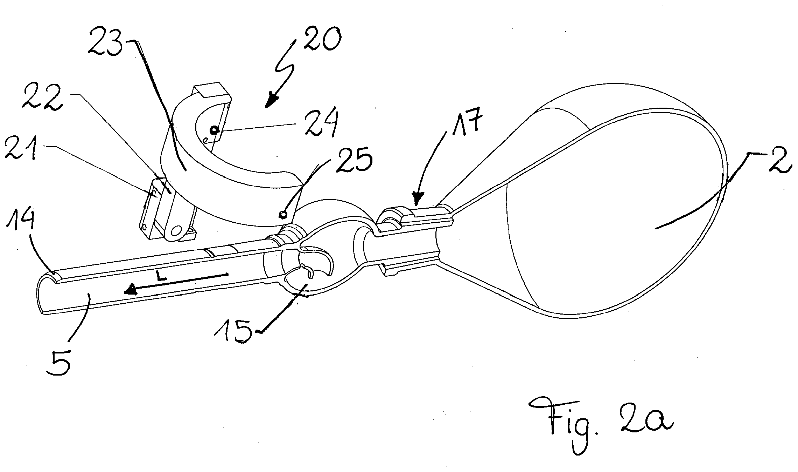

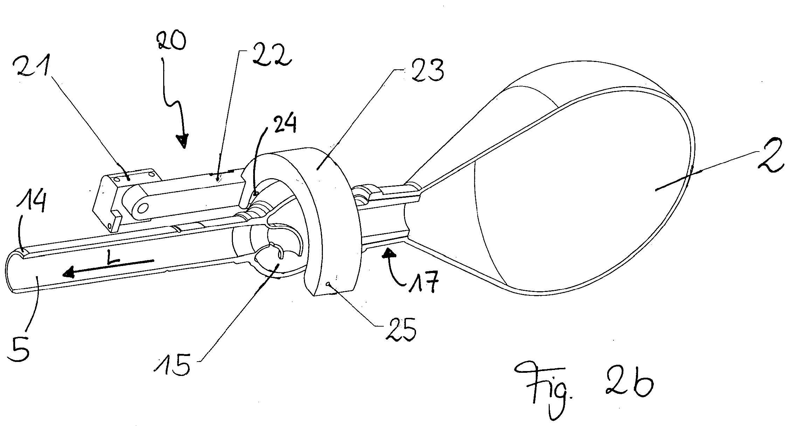

Weiter umfasst der Rotationsverdampfer eine Bedieneinheit 10 zur Steuerung des Rotationsantriebes 9, des Heizbades 3, einer Vakuumpumpe und des Vertikalantriebes, sowie optional eine in Fig. 1 nicht gezeigte Steuereinheit, über die das Gaseinlassventil 13 in koordinierter Weise gesteuert wird. Die Bedieneinheit 10 kann beispielsweise an dem Gehäuse 16 angeordnet sein, Fig. 2a und 2b zeigen den Verdampfungskolben 2 und die mittels eines Normschliffs 17 damit verbundene Dampfdurchführung 5, sowie eine Erfassungseinrichtung 20 mit einer Erfassungseinheit 23 zur Schaumerkennung. In Fig. 2a ist die Erfassungseinheit 23 in einer ersten Position beabstandet von der Dampfdurchführung 5 dargestellt und in Fig. 2b in einer zweiten Position, in welcher die Erfassungseinheit an der Dampfdurchführung 5 in einer Messposition angebracht ist.

Die durch eine Wandung 14 begrenzte Dampfdurchführung 5 erstreckt sich im Wesentlichen in eine Längsrichtung L und ist dazu geeignet, Dampf in die Längsrichtung L weiterzuleiten. Sie ist beispielsweise aus Glas oder einem durchsichtigen Kunststoff gefertigt. Weiter weist sie eine Kammer 15 auf, welche als eine Verbreiterung der Dampfdurchführung 5 ausgebildet ist.

Die Erfassungseinrichtung 20 umfasst eine Halterung 21 zur Befestigung an der Dampfdurchführung 5 oder an einem Gehäuse 16, sowie eine Erfassungseinheit 23, welche über einen Schwenkarm 22 mit der Halterung 21 verbunden ist. Die Erfassungseinheit 23 ist im Wesentlichen halbkreisförmig bzw. in Form eines Halbringes bzw. gabelförmig ausgebildet. Vorzugsweise ist die Erfassungseinheit 23 an eine Form eines Außenabschnitts der Kammer 15 senkrecht zur Längsrichtung L angepasst, wie Fig. 2b zeigt, Auf der Erfassungseinheit 23 ist ein als eine Lichtschranke ausgeführter Sensor, bevorzugt ein Rotlichtsensor, angeordnet, welcher eine Quelle 24 und einen Empfänger 25 für elektromagnetische Strahlung umfasst. Die Wellenlänge der von der Quelle 24 ausgesandte Strahlung liegt dabei vorzugsweise im Bereich von rotem Licht oder Infrarotlicht und ist beispielsweise als Leuchtdiode ausgebildet. Der Empfänger ist dazu ausgebildet, die von der Quelle ausgesandte Strahlung zu empfangen und ist beispielsweise als Fotodiode ausgebildet. Die Quelle 24 und der Empfänger 25 der Lichtschranke sind auf einer der Kammer 15 zugewandten Seite der Erfassungseinheit 23 so angeordnet, dass sie im Wesentlichen auf gegenüberliegenden Seiten der Kammer 15 liegen wenn die Erfassungseinheit 23 an der Dampfdurchführung 5 angebracht ist. Dadurch durchläuft der von der Quelle 24 ausgesandte Lichtstrahl die Kammer 15. In dieser in Fig. 2b gezeigten Messposition ist die Erfassungseinheit 23 dazu geeignet, in der Kammer 15 auftretenden Schaum zu erfassen. Die halbkreisförmige bzw. gabelförmige Erfassungseinheit 23 umschließt dabei die Kammer 15 in einer Umfangsrichtung zumindest abschnittsweise.

Die Halterung 21 ist dabei an dem Gehäuse befestigt, so dass kein Element der Erfassungseinrichtung in dem Dampfweg angeordnet ist. Alternativ dazu kann die Halterung 21 auch außen an einer Wandung 14 eines Längsabschnittes der Dampfdurchführung 5 befestigt sein.

Gemäß dem Ausführungsbeispiel der Erfassungseinrichtung zur Schaumerkennung ist die Erfassungseinheit 23 bewegbar mit der Halterung 21 verbunden, so dass die Erfassungseinheit 23 beispielsweise bei nicht schäumenden Stoffen von der Kammer 15 beabstandet werden kann, beispielsweise weggeklappt oder von dieser weggedreht werden, ohne die Halterung 21 von dem Gehäuse 16 bzw, der Dampfdurchführung 5 zu lösen. In Fig. 2a ist diese erste Position gezeigt.

Zum Auswerten des SignaLs des Empfängers 25 umfasst der Rotationsverdampfer 1 eine Auswerteinheit (in Fig. 1 nicht gezeigt). Ferner kann die Lichtschranke von der Steuereinheit gesteuert werden und/oder die Steuereinheit kann direkt das Signal der Lichtschranke empfangen.

Im Betrieb wird zunächst ein Ausgangsstoff, welcher den zu verdampfenden Stoff enthält, in den Verdampfungskolben 2 eingefüllt. Dann wird der Verdampfungskolben 2 durch den Rotationsantrieb 9 in Drehung versetzt. Durch Eintauchen in das Heizbad 3 und/oder Anlegen eines Unterdrucks, durch den die Siedetemperatur des Destillats verringert werden kann, wird das Destillat aus dem Ausgangsstoff verdampft. Durch die Rotation des Verdampfungskolbens 2 wird auf dessen Innenseite ein dünner Film, beispielsweise ein Flüssigkeitsfilm, des Ausgangsstoffes erzeugt, so dass die Oberfläche des Ausgangsstoffes vergrößert und die Verdampfung beschleunigt ist. Über die Dampfdurchführung 5, die Dampfzuführung 6 und optional das Expansionsgefäß 7 gelangt das verdampfte Destillat in den Kondensator 4, wo es gekühlt wird und kondensiert. Das verflüssigte Destillat fließt durch das Auslassventil in einen in Fig. 1 nicht gezeigten Auffangkolben und kann dort entnommen werden.

Dabei sendet die Quelle 24 einen Lichtstrahl aus, der die Kammer 15 durchläuft und dann auf den Empfänger 25 auftrifft. Trifft der Lichtstrahl dabei auf Schaum, so wird er u.a. reflektiert und/oder gebrochen und gelangt dadurch nicht mehr oder nur abgeschwächt zu dem Empfänger 25. Diese Veränderung des Empfängersignals wird von der Auswerteinheit registriert und ein entsprechendes Signal an die Steuereinheit weitergeleitet, die wiederum einen Steuerbefehl zum kurzzeitigen Öffnen des Gaseinlassventils 13 an dieses aussendet, so dass eine dosierte Menge an Gas, beispielsweise Luft oder ein Inertgas, durch das Gaseinlassventil 13 einströmt und so den Druck im Dampfweg und insbesondere in der Kammer 15 erhöht, Durch die Druckerhöhung werden die Schaumblasen teilweise oder vollständig zerstört. Nach Schließen des Gaseinlassventils 13 wird durch die Vakuumpumpe vorzugsweise wieder ein gewünschter Unterdruck in dem Dampfweg eingestellt.

Optional können der durch die Vakuumpumpe erzeugte Unterdruck und/oder eine Temperatur des Heizbades und/oder die Rotationsgeschwindigkeit des Verdampfungskolbens während des Verdampfungsvorganges derart verändert werden, dass eine Schaumbildung seltener und/oder in geringerem Ausmaß bzw. gar nicht auftritt. Hierzu kann die Steuerung des Rotationsantriebes und/oder des Heizbades und/oder der Vakuumpumpe und/oder des Vertikalantriebes ebenfalls über die Steuereinheit erfolgen.

Die Verwendung einer erfindungsgemäßen Erfassungseinrichtung ist nicht auf den Einsatz in einem Rotationsverdampfer bzw. einem Laborgerät zum Verdampfen eines Stoffes beschränkt. Vielmehr ist die Erfindung in allen Laborgeräten und Prozessen, bei denen eine Schaumentwicklung auftreten kann, beispielsweise bei Magnetrührern, Rührwerken oder Schüttel- und Mischgeräten, anwendbar.

Die Erfassungseinrichtung kann wie oben beschrieben Bestandteil des Laborgeräts sein, sie kann aber auch als getrenntes Modul zum Aus- und/oder Nachrüsten eines solchen Laborgeräts bereitgestellt sein. Ein derartiger Aus- oder Nachrüstsatz kann weiter eine geeignete Dampfdurchführung umfassen mit einer Kammer, deren Geometrie an eine Form des Erfassungselements angepasst ist.

Ferner muss das Gaseinlassventil nicht zwingend in der Dampfdurchführung angeordnet sein, Es kann vielmehr an einer beliebigen Stelle im Dampfweg zwischen Verdampfungskolben und Kondensator angeordnet sein, insbesondere an einem Expansionsgefäß. Das Gaseinlassventil kann auch manuell bedienbar sein, so dass eine Nachdosierung des Unterdrucks und/oder ein manuelles Belüften zur Schaumzerstörung möglich sind.

Die Halterung der Erfassungseinrichtung kann auch an einem anderen geeigneten Element des Laborgeräts angebracht sein und das Erfassungselement zur Schaumerkennung kann an einer beliebigen Stelle außerhalb des Dampfweges vorgesehen sein, insbesondere an einer Außenseite des Kolbens, Die Dampfdurchführung kann auch ohne Kammer ausgebildet sein, so dass die Schaumerkennung an einem Längsabschnitt der Dampfdurchführung erfolgt.

Mit der Erfassungseinrichtung kann nicht nur das Auftreten von Schaum detektiert werden, vielmehr ist es auch möglich Rückschlüsse auf eine Dichte und/oder Menge des Schaumes zu ziehen, Hierzu wird ein abgeschwächtes Signal der Lichtschranke ausgewertet, wobei die Signalstärke ein Maß für die Dichte bzw. Menge des entstandenen Schaums ist. Das abgeschwächte Signal der Lichtschranke kann dabei in Relation zu einem nicht abgeschwächten Signal gesetzt werden.

Die Erfindung betrifft nicht nur die Schaumerkennung mittels eines Rotlichtsensors. Vielmehr können auch andere optische und/oder akustische Sensoren oder andere geeignete Sensoren verwendet werden.

## Patentansprüche

1. Laborgerät, insbesondere Rotationsverdampfer (1), zum Verdampfen eines Stoffes, vorzugsweise unter Unterdruck, mit
einem Verdampfungskolben (2) zur Aufnahme des zu verdampfenden Stoffes, einem Kondensator (4) zum Kondensieren des verdampften Stoffes und einer Dampfdurchführung (5) zum Durchleiten des verdampften Stoffes, welche in einem Dampfweg zwischen dem Verdampfungskolben (2) und dem Kondensator (4) angeordnet ist, **dadurch gekennzeichnet,**
**dass** das Laborgerät (1) weiter eine Erfassungseinheit (23) zur Schaumerkennung umfasst, welche außerhalb der Dampfdurchführung (5) und/oder des Verdampfungskolbens (2) vorgesehen ist, wobei die Erfassungseinheit (23) gabelförmig ausgebildet ist und die Dampfdurchführung (5) und/oder den Verdampfungskolben (2) zumindest teilweise umschließt und wobei die Erfassungseinheit (23) zumindest einen Sensor zur Erfassung eines Signals aufweist.

2. Laborgerät nach Anspruch 1, wobei die Erfassungseinheit (23) an einer Stelle nach einem Normschliff (17) des Verdampfungskolbens (2) vorsehen ist.

3. Laborgerät nach Anspruch 1 oder 2, wobei die Dampfdurchführung (5) einen Verbreiterungsabschnitt (15) aufweist und die Erfassungseinheit (23) zur Schaumerkennung vorzugsweise an dem Verbreiterungsabschnitt (15) vorgesehen ist.

4. Laborgerät nach einem der Ansprüche 1 bis 3, wobei eine Geometrie der Erfassungseinheit (23) an eine Geometrie zumindest eines Abschnitts des Verdampfungskolbens (2) oder der Dampfdurchführung (5), vorzugsweise eines Verbreiterungsabschnitts (15) der Dampfdurchführung (5), angepasst ist.

5. Laborgerät nach einem der Ansprüche 1 bis 4, wobei die Erfassungseinheit (23) mittels einer Halterung (21) an einer Außenseite der Dampfdurchführung (5) oder einem Gehäuse (16) des Laborgeräts befestigbar ist.

6. Laborgerät nach Anspruch 5, wobei die Erfassungseinheit (23) bewegbar, vorzugsweise schwenkbar, mit der Halterung (21) verbunden ist, so dass die Erfassungseinheit (23) von der Dampfdurchführung (5) und/oder von dem Verdampfungskolben (2) in eine Messposition und in eine von der Messposition beabstandete Position bewegbar ist.

7. Laborgerät nach einem der Ansprüche 1 bis 6, wobei der Sensor zur Erfassung eines Signals ein optischer Sensor, vorzugsweise ein Rotlichtsensor (24, 25), ist.

8. Laborgerät nach einem der Ansprüche 1 bis 7 mit weiter einer Einrichtung (13) zur Schaumreduzierung, wobei die Einrichtung (13) zur Schaumreduzierung manuell und/oder automatisch bedienbar ist.

9. Laborgerät nach Anspruch 8 mit einem Gaseinlass (13) zum dosierten Zuführen eines Gases, insbesondere Luft oder einem Inertgas.

10. Laborgerät nach einem der Ansprüche 1 bis 9 mit einer Auswerteinheit zum Auswerten eines von der Erfassungseinheit (23) erfassten Signals.

11. Verwendung einer Steuereinheit für ein Laborgerät nach einem der Ansprüche 1 bis 10 zur Steuerung eines solchen Laborgeräts, wobei die Steuereinheit ausgebildet und/oder programmiert ist, eine Einrichtung (13) zur Schaumreduzierung in Abhängigkeit eines Signals einer Erfassungseinheit (23) zur Schaumerkennung zu steuern.

12. Verwendung nach Anspruch 11, wobei die Steuereinheit weiter dazu ausgebildet und/oder programmiert ist, eine Temperatur in dem Laborgerät, insbesondere eines Heizbades (3), und/oder eine Rotationsgeschwindigkeit eines drehbaren Verdampfungskolbens (2) und/oder eine Einrichtung zum Erzeugen eines Unterdrucks zu steuern.

13. Verfahren zur Schaumerkennung bei einem Laborgerät, wobei das Laborgerät ein Laborgerät nach einem der Ansprüche 1 bis 10 ist, mit den Schritten:
(a) Einfüllen eines Ausgangsstoffes, welcher den zu verdampfenden Stoff enthält, in den Verdampfungskolben (2),
(b) Verdampfen des zu verdampfenden Stoffes aus dem Ausgangsstoff,
(c) Durchleiten des verdampften Stoffes durch die Dampfdurchführung (5) zum Kondensator (4) und Kondensieren des verdampften Stoffes im Kondensator (4), und
(d) Durchführen einer Schaumerkennung mittels der Erfassungseinrichtung (23).

## Claims

1. A laboratory device, in particular a rotary evaporator (1), for evaporating a substance, preferably under reduced pressure, having
an evaporation flask (2) for receiving the substance to be evaporated,
a condenser (4) for condensing the evaporated substance and
a vapor passage (5) for passing through the evaporated substance, which vapor passage is arranged in a vapor path between the evaporation flask (2) and the condenser (4), **characterized in that**
the laboratory device (1) further comprises a detection unit (23) for foam detection, which detection unit is provided outside of the vapor passage (5) and/or of the evaporation flask (2), wherein the detection unit (23) has a bifurcate shape and at least partially encloses the vapor passage (5) and/or the evaporation flask (2), and wherein the detection unit (23) has at least one sensor for detecting a signal.

2. The laboratory device according to claim 1, wherein the detection unit (23) is provided at a position after a standard joint (17) of the evaporation flask (2).

3. The laboratory device according to claim 1 or 2, wherein the vapor passage (5) has a widening portion (15) and the detection unit (23) for foam detection is preferably provided on the widening portion (15).

4. The laboratory device according to one of claims 1 to 3, wherein a geometry of the detection unit (23) is adapted to a geometry of at least a portion of the evaporation flask (2) or of the vapor passage (5), preferably of a widening portion (15) of the vapor passage (5).

5. The laboratory device according to one of claims 1 to 4, wherein the detection unit (23) is mountable on an exterior of the vapor passage (5) or on a housing (16) of the laboratory device by means of a mounting device (21).

6. The laboratory device according to claim 5, wherein the detection unit (23) is movably, preferably pivotably, connected to the mounting device (21), such that the detection unit (23) can be moved from the vapor passage (5) and/or the evaporation flask (2) to a measuring position and to a position at a distance to the measuring position.

7. The laboratory device according to one of claims 1 to 6, wherein the sensor for detecting a signal is an optical sensor, preferably a red light sensor (24, 25).

8. The laboratory device according to one of claims 1 to 7, further comprising a device (13) for foam reduction, wherein the device (13) for foam reduction can be operated manually and/or automatically.

9. The laboratory device according to claim 8, having a gas inlet (13) for supplying of a gas, in particular air or an inert gas, in a metered manner.

10. The laboratory device according to one of claims 1 to 9, having an evaluation unit for evaluating a signal detected by the detection unit (23).

11. Use of a control unit for a laboratory device according to one of claims 1 to 10 for controlling such a laboratory device, wherein the control unit is configured and/or programmed to control a device (13) for foam reduction in response to a signal of a detection unit (23) for foam detection.

12. The use according to claim 11, the control unit further being configured and/or programmed to control a temperature in the laboratory device, in particular of a heating bath (3), and/or a rotation speed of a rotatable evaporation flask (2) and/or a device for generating a reduced pressure.

13. A method of foam detection in a laboratory device, the laboratory device being a laboratory device according to one of claims 1 to 10, comprising the steps of:
(a) pouring an initial substance that contains the substance to be evaporated into the evaporation flask (2),
(b) evaporating the substance to be evaporated from the initial substance,
(c) passing the evaporated substance through the vapor passage (5) to the condenser (4) and condensing the evaporated substance in the condenser (4), and
(d) carrying out a foam detection by means of the detection unit (23).

## Revendications

1. Un appareil de laboratoire, en particulier un évaporateur rotatif (1), pour l'évaporation d'une substance, de préférence sous pression négative, ayant
un ballon d'évaporation (2) destiné à recevoir la substance à évaporer,
un condenseur (4) pour condenser la substance évaporée et
un passage de vapeur (5) pour faire passer la substance vaporisée, qui est disposé dans un trajet de vapeur entre le ballon de vaporisation (2) et le condenseur (4),
**caractérisé en ce que**
l'appareil de laboratoire (1) comprend en outre une unité de détection (23) pour la détection de mousse, qui est prévue à l'extérieur du passage de vapeur (5) et/ou du ballon d'évaporation (2), l'unité de détection (23) étant de conception bifurquée et entourant au moins partiellement le passage de vapeur (5) et/ou le ballon d'évaporation (2), et l'unité de détection (23) ayant au moins un capteur pour détecter un signal.

2. L'appareil de laboratoire selon la revendication 1, dans lequel l'unité de détection (23) est prévue à un emplacement en aval d'un joint standard (17) du ballon d'évaporation (2).

3. L'appareil de laboratoire selon la revendication 1 ou 2, dans lequel le passage de vapeur (5) a une partie d'élargissement (15) et l'unité de détection (23) pour la détection de mousse est de préférence prévue au niveau de la partie d'élargissement (15).

4. L'appareil de laboratoire selon l'une quelconque des revendications 1 à 3, dans lequel une géométrie de l'unité de détection (23) est adaptée à une géométrie d'au moins une partie du ballon d'évaporation (2) ou du passage de vapeur (5), de préférence d'une partie d'élargissement (15) du passage de vapeur (5).

5. L'appareil de laboratoire selon l'une quelconque des revendications 1 à 4, dans lequel l'unité de détection (23) peut être fixée au moyen d'un support (21) à un côté extérieur du passage de vapeur (5) ou à un boîtier (16) de l'appareil de laboratoire.

6. L'appareil de laboratoire selon la revendication 5, dans lequel l'unité de détection (23) est reliée de manière mobile, de préférence pivotante, au support (21), de sorte que l'unité de détection (23) peut être déplacée du passage de vapeur (5) et/ou du ballon d'évaporation (2) dans une position de mesure et dans une position espacée de la position de mesure.

7. L'appareil de laboratoire selon l'une quelconque des revendications 1 à 6, dans lequel le capteur de détection d'un signal est un capteur optique, de préférence un capteur de lumière rouge (24, 25).

8. L'appareil de laboratoire selon l'une quelconque des revendications 1 à 7, comprenant en outre un dispositif (13) de réduction de la mousse, le dispositif (13) de réduction de la mousse pouvant être actionné manuellement et/ou automatiquement.

9. L'appareil de laboratoire selon la revendication 8, ayant une entrée de gaz (13) pour l'alimentation dosée d'un gaz, en particulier de l'air ou d'un gaz inerte.

10. L'appareil de laboratoire selon l'une quelconque des revendications 1 à 9 avec une unité d'évaluation pour évaluer un signal détecté par l'unité de détection (23).

11. Une utilisation d'une unité de commande d'un appareil de laboratoire selon l'une quelconque des revendications 1 à 10 pour commander un tel appareil de laboratoire, l'unité de commande étant conçue et/ou programmée pour commander un dispositif (13) de réduction de la mousse en fonction d'un signal d'une unité de détection (23) de la mousse.

12. L'utilisation selon la revendication 11, dans laquelle l'unité de commande est en outre conçue et/ou programmée pour commander une température dans l'appareil de laboratoire, en particulier d'un bain chauffant (3), et/ou une vitesse de rotation d'un ballon d'évaporation rotatif (2) et/ou un dispositif pour générer une pression négative.

13. Procédé de détection de mousse dans un appareil de laboratoire, dans lequel l'appareil de laboratoire est un appareil de laboratoire selon l'une quelconque des revendications 1 à 10, comprenant les étapes suivantes :
(a) introduire une matière de départ contenant la matière à évaporer dans le ballon d'évaporation (2),
(b) évaporer la substance à évaporer de la substance de départ,
(c) faire passer la substance vaporisée à travers le passage de vapeur (5) vers le condenseur (4) et condenser la substance vaporisée dans le condenseur (4), et
(d) effectuer une détection de mousse au moyen du dispositif de détection (23).
